# EUROPEAN PATENT APPLICATION

(11) **EP 3 175 901 A1**
(43) Date of publication of application: **07.06.2017**
(21) Application number: 15828094.1
(22) Date of filing: 26.05.2015
(51) Int. Cl.: B01D 35/26

(54) **DEVICE AND METHOD FOR PURIFYING LIQUID**

(30) Priority: 31.07.2014 RU 2014131845
(71) Applicant: Electrophor, Inc., Woodmere NY 11598 (US)
(72) Inventor: SHMIDT, Joseph Lvovich, New York 11598 (US); KUZMIN, Alexei Leonidovich, St.Petersburg 198215 (RU); RUSINOV, Gleb Dmitrievich, St.Petersburg 198302 (RU); MITILINEOS, Alexander Gennadievich, St.Petersburg 195229 (RU)
(74) Representative: Szabo, Zsolt
(86) International application number: PCT/RU2015/000326
(87) International publication number: WO 2016/018175

(57) **Abstract**

The group of inventions relates to devices for purifying liquid, primarily drinking water, which devices are intended for use as autonomous devices in domestic conditions, in allotments and gardens and the service industry, and to methods for purifying liquid. In particular, this invention concerns autonomous pressure devices which subject defined portions of liquid to processing under pressure. The device and the method for purifying liquid make it possible to rapidly and efficiently purify liquid by virtue of the fact that the device for purifying liquid is able to discharge all of the unpurified liquid from an unpurified liquid receiving tank when a volume of gas which is greater than the volume of unpurified liquid situated in the unpurified liquid receiving tank is fed in. The technical result is an increase in the degree of purification of the liquid with a simultaneous reduction in the process time for the purification of the liquid.

## Description

### Field of the Invention

The group of inventions relates to liquid, preferably drinking water, purification devices which are intended for use as autonomous devices in domestic conditions for allotments and gardens, in the service industry, and to methods for purifying liquids. In particular, the present invention concerns autonomous pressure-type devices which subject certain portions of a liquid to treatment under pressure, and methods for purifying a liquid using such devices.

The invention may be used for purification of the drinking water and other domestic-use liquids in other fields of industry.

### Prior art

Known are supplied-by-gravity liquid purification devices. Large-sized carafes/jugs can serve as examples of such devices, and a water to be treated is poured thereto, for example, from a tap. Systems of such type usually has an unpurified liquid-receiving container and a purified liquid-receiving container, and a replaceable filtering module filed with a filtering medium. Ionites or activated carbon are typically used as filtering media. The operation principle of such liquid purification devices is extremely simple: a liquid is poured into the unpurified liquid-receiving container, and said liquid passes under gravity through the filtering module, enters the purified liquid-receiving container. In the devices with gravity-supply conditions, coarse sorbents are typically used.

It is known that fine sorbents, such as a powered activated carbon or a powdered ion-exchange resin, as well as finely-purified filtering media, for example, hollow-fiber, membrane or carbon-unit elements, have a high kinetics of sorption which leads to improvement in purification properties of a filtering element. Use of above-listed filtering media in gravity-supply devices, however, can lead to decrease in a filtering rate down to a value at which a liquid may stop to pass through the filtering module because a pressure generated by a liquid column above the module is insufficient to deal with a total hydraulic resistance of the filtering material.

To achieve the most effective filtration or purification of a liquid, it is expedient to provide contact of the liquid with a filtering medium over as a large area as possible by a maximally intensive and complete forced adsorption process of the liquid to remove impurities present therein.

The mentioned problem was partially solved in the prior art by development of autonomous pressure devices for purification of liquids. In such devices, a liquid forcedly passes through a filter due to an air pressure difference generated between an unpurified liquid-receiving container and a purified liquid-receiving container, in other words, between an inlet side and an outlet side. Such liquid purification devices are well known.

For example, a fluid filtration and dispensing system is known from the publication WO 00/71468 A1 (Kimberly-Clark Worldwide Inc. US, published on 30.11.2000, C02F 1/00), said system comprising a reservoir for an unpurified liquid and a lid with a manual air pumping means (bellows) integrated therewith, an unpurified liquid passageway having a filtering assembly placed therein and a purified liquid outlet. A seal element disposed in the lid provides inside the unpurified liquid reservoir a air-tightness necessary to generate an excess air pressure above an unpurified liquid level. The manual air pumping means is provided with an inlet air valve and an outlet air valve to supply air into the unpurified liquid reservoir. The operation principle of the liquid filtration and dispensing system is that the air is forced into an upper portion of said reservoir above the unpurified liquid level. When the upper portion of the bellows is depressed, the compressed air pushes the liquid out of the hermetically sealed unpurified liquid reservoir into the passageway where the liquid flows through the filtering assembly and further flows through the filtered liquid outlet for use.

Known is a liquid, preferably drinking water, purification device according to patent RU 2,131,759 (ZAO "Akvafor", published on 20.06.1999, B01D27/02, C02F1/18, C02F9/00), comprising a filtering module, a reducing bush with an internal partition on which a union body for supplying a liquid to be purified is positioned. A pipe for supplying the liquid to be purified is leak-proof connected to the union body. The device further comprises a means for forced movement of the liquid to be purified from a container for the liquid to be purified into the filtering module, said means being embodied as a pneumatic delivery unit and pipes for supplying the liquid to be purified. As the container, the device comprises an open unpurified liquid container or a polymeric bottle for refreshing drinks or other food liquids, said container or bottle having a thread on a neck. The device operates as follows. The liquid (dirty water) to be purified is pumped by the pneumatic delivery unit through the pipe for supplying the liquid to be purified, through the union body for supplying the liquid to be purified, said body being on the reducing bush, and into the filtering module, is filtered through the filtering medium and is purified, while the purified liquid (pure water) then goes through a purified liquid discharge pipe branch in a filtering module shell and through a purified liquid discharge pipe into a purified liquid (pure water) tank.

Known is a liquid purifying device according to US Patent 6,136,188 (Pasupathicoil R. Soundar Rajan, Gary S. Hess (US), published on 24.10.2000, B01D 35/26), comprising a container for an unpurified liquid, an air pump, a cap portion with an extendable spout for a purified liquid to flow out and with a built-in filtering portion. The filtering portion includes an upper microscreen and a lower microscreen, an upper layer of foam and a lower layer of foam, and a filtering material. The air pump is coupled with respect to the container for the unpurified liquid and is provided with a check-flow valve and an air flow valve. After filling the liquid purifying device with a water, air is manually injected by means of the air pump into the container for the unpurified liquid and urges the unpurified liquid under pressure to flow through the filtering portion, and the filtered water flows to a user.

Known is a liquid purification device according to US Patent 5,225,078 (Ametek, Inc., published on 06.07.1993, B01D 27/02). A pitcher filter assembly is intended for domestic use in purification of a liquid. The pitcher assembly consists of a pitcher for receiving a purified liquid, a receiving reservoir for holding the unpurified liquid, said reservoir being divided by a bellows element into an upper portion and a lower portion, a filter element, and a cover with a pressure equalizing hole. When the user manually depresses a flexible central portion of the cover, a pressure difference occurs within the present filter assembly.

Known is a liquid purification device according to patent RU 2,095,317 (VNPP "Kvant", published on 10.11.1997, C02F1/18, B01D63/08), comprising a housing having a channel with a depressurization shutdown valve in an upper housing portion, a cover, a filter unit, and a means for pressurizing a liquid to be purified embodied as a flexible material container, wherein the container is provided with inlet and outlet check-flow valves, the filter unit is embodied as a pack of filter cells assembled on a collector pipe being in communication with the external atmosphere via a discharge branch pipe in a housing wall. The operation principle of the device consists in periodical operation of a container to generate a pressure sufficient for an unpurified liquid to flow through the filtering unit and for a purified liquid to rise along the discharge branch pipe for use. The pressure generation container is operated manually.

Known is a liquid, particularly drinking water, purification device according to US Patent 4,636,307 (Mitsubishi Rayon Co., Ltd., Japan, published on 13.01.1987, B01D19/00; B01D 13/01), including a container for an unpurified liquid, a lid fitted on the container for the unpurified liquid, a filtering module consisting of an absorbent module and a hollow-fiber module, a nozzle for discharging a purified liquid, and a hand-operated pressure means provided with a pressure-release means. The filtering module is mounted in the container for the unpurified liquid and has an upper cover member fitted on the upper end of the container body. The nozzle for discharging the purified liquid protrudes from the upper cover member through an opening to the outside. The hand-operated pressure means with the pressure-release means are inserted into the lid. When the pressure device operates, the liquid from the container for the unpurified liquid forcedly flows through the filtering module and discharges through the nozzle for discharging the pure water. In one embodiment of the device, a filtering module is used wherein a hollow-fiber module is inserted in an adsorbent unit, however, in this case the liquid purification device is mounted onto a pressurized city water piping, because a hand-operated pressure is insufficient for the city water to pass such a filtering module structure through.

The autonomous purification devices as disclosed in the prior art have a number of disadvantages; for example, due to use of filtering modules containing fine sorbents, a liquid to be purified cannot overcome their total hydraulic resistance without action of a stable constant pressure, therefore, a portion of the liquid will remain in an unpurified liquid container and will be unable to flow through a filtering module under gravity after completion of the filtration process. Further, since a user is unable to monitor a degree of a physical force he applies during periodical action to a pressure device throughout a filtration cycle, an excessive pressure generated by the pressure device above a level of the unpurified liquid will be unstable. Because of this, the uniformity and stability of a liquid flow through the filtering module is not provided during the filtration cycle. In this case, "the filtration cycle" should be understood to mean a time for one portion of the unpurified liquid to flow from the unpurified liquid container through a replaceable filtering module into a purified liquid container. Because of instability in an excess air pressure generated by the pressure device, the liquid flows through the replaceable filtering module non-uniformly which leads to ineffective use of a filtering medium and to reduction in a degree of purification, respectively.

Known is a liquid purification device according to RF Patent 2,445,999 (ZAO "Akvafor Production", published on 27.03.2012, B01D 27/02, B01D 35/26).

This technical solution is the closest in the technical essence to the present invention and is selected as a prototype. The liquid purification device comprises an unpurified liquid-receiving container with a detachable cover, a purified liquid-receiving container, a replaceable filtering module filled with a filtering medium, and an automatic means for time-tunable air delivery in a filtration mode (an automatic delivery means). The automatic delivery means delivers air into the receiving container to generate an excess air pressure above an unpurified liquid level during the whole filtration cycle, that is, during the time when one portion of an unpurified liquid flows from the unpurified liquid-receiving container 1 through the replaceable filtering module into the purified liquid-receiving container. The automatic delivery means is connected to the purified liquid-receiving container by means of a delivery pipe branch provided with a pressure regulating valve.

The automatic means for time-tunable air delivery during the filtration mode includes a pneumatic delivery unit, a control unit, a power supply, a liquid level sensor and at least one feedback means, wherein an inlet of the air delivery unit is in communication with atmosphere. The term "is in communication with atmosphere" should be understood to mean that the pneumatic delivery unit has an inlet pressure close to the atmospheric pressure. An outlet of the pneumatic delivery unit is connected to an input of the control unit whose output is connected to an input of the power supply, while the liquid level sensor and the at least one feedback means are connected to the control unit capable of setting a sequence and time modes for operation of the pneumatic delivery unit in the filtration mode. The sequence and time modes for operation of the pneumatic delivery unit in the filtration mode are set, for example, by a programmable microcontroller arranged in the control unit, and stabilizing the excessive air pressure above the unpurified liquid level is set by feedback algorithms using feedback means and other sensors or means which convert an excess air pressure value into a signal for transmission to the control unit.

The prototype device maintains a pressure above the unpurified liquid level constant throughout the filtration cycle thereby to eliminate the problem of uniformity in the unpurified liquid flow through the filtering module. However, the prototype does not solve the problem of purifying all liquid contained in the unpurified liquid-receiving container, therefore, an amount of the unfiltered liquid remains in the unpurified liquid-receiving container after completion of the filtration cycle in the prototype device, which reduces the operational efficiency of said device and results in formation of a stagnation zone. Such stagnation zone may lead to the growth of harmful bacteria in the unpurified liquid. Furthermore, maintenance of a constant value for the pressure above the unpurified liquid level in the case of reduction in a gas pressure assumes pressurization of a gas into the unpurified liquid-receiving container, and assumes venting of the gas into atmosphere in case of increase in the gas pressure. To this end, the prototype device has complex algorithms installed therein and setting the sequence and time modes for operation of said device.

### Disclosure of the Invention

A common object for the group of inventions and a required technical result accomplished using the group of invention is to provide a liquid, in particular drinking water, purification device and method, to increase the degree of purification of the liquid at simultaneous reduction in a purification process time, and also to accomplish a guaranteed displacement of all unpurified liquid out of the unpurified liquid-receiving container in the most effective way.

Said object and the required technical result in use the group of inventions are accomplished by a liquid purification device comprising: an unpurified liquid-receiving container connected to an automatic means for time-tunable gas delivery in a filtration mode by means of a connecting member, said means for time-tunable gas delivery in a filtration mode including a pneumatic gas delivery unit, a control unit and a power supply; a purified liquid-receiving container and a filtering module, said device - due to operation of the automatic means for time-tunable gas delivery - being capable of displacement of all unpurified liquid out of the unpurified liquid-receiving container provided that a volume of a supplied gas is larger than a volume of an unpurified liquid present in the unpurified liquid-receiving container, wherein the automatic means for time-tunable gas delivery is capable of continuing a liquid filtration process by means of displacement of a portion of a liquid out of the filtering module after filtration of all liquid from the unpurified liquid-receiving container into the purified liquid-receiving container, and by that the control unit is capable of direct controlling the pneumatic gas delivery unit, and by that the filtering module is provided with a means preventing a purified liquid from penetration back into said module, wherein the latter means preferably is a check-flow valve that can be arranged in an upper portion or a lower portion of the filtering module, and by that a means for outflow of the purified liquid into the purified liquid-receiving container is arranged above a level of the purified liquid present in the purified liquid-receiving container, and by that the filtering module consists of at least two filtering elements, wherein the filtering module is capable of passing a liquid therethrough with a change of a liquid flow direction at least once and in such a manner that a portion of a filtered liquid preferably enters the purified liquid-receiving container while a smaller portion of said liquid remains in the filtering module to wet the filtering elements, and by that, when a gas flow enters the filtering module and changes the flow direction through the module at least once, it catches liquid particles and is removed from the filtering module together with them through the means for outflow of the purified liquid, and by that, when the gas passes under action of centrifugal forces, the smaller portion of the liquid is delayed in "dead zones" of the filtering module.

Said object and the required technical result in use the group of inventions are also accomplished by a method for purifying a liquid, comprising: filling a receiving container with an unpurified liquid; performing an operation cycle of an automatic means for time-tunable gas delivery during closure of a water purifier cover by delivering a gas into the unpurified liquid-receiving container so that the unpurified liquid is subjected to a pressure of the gas and flows from the unpurified liquid-receiving container through the filtering module into a purified liquid-receiving container while an excess gas pressure gradually decreases until completion of the filtration process with the possibility of further repeating the operation cycle of the automatic means for time-tunable gas delivery, said method according to the invention comprising the steps of: displacing the unpurified liquid out of the unpurified liquid-receiving container by a pressure of a gas volume larger than a volume of the unpurified liquid present in the unpurified liquid-receiving container; and then, after turning the automatic means for time-tunable gas delivery off, passing the liquid residual in the unpurified liquid-receiving container under a pressure of an excessive gas volume through the filtering module into the purified liquid-receiving container.

The claimed group of inventions is directed to eliminate said disadvantages of the prototype.

### Brief Description of Drawings

1. Fig. 1 shows a liquid purification device with a filtering module arranged within a purified liquid-receiving container and with a means for outflow of a purified liquid arranged at the top of the filtering module.
2. Fig. 2 shows a liquid purification device with a filtering module arranged within a purified liquid-receiving container and with a means for outflow of a purified liquid arranged at the bottom of the filtering module.
3. Fig. 3 shows a liquid purification device with a filtering module arranged within an unpurified liquid-receiving container and with a means for outflow of a purified liquid arranged at the bottom of the filtering module.

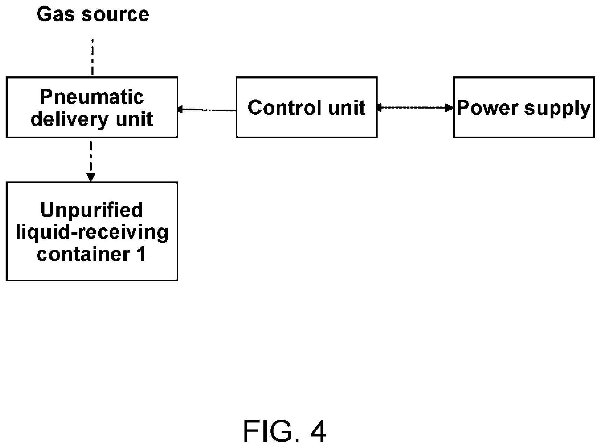

4. Fig. 4 shows a functional connection diagram of an automatic means for time-tunable gas delivery. Conventional symbols: air _._._; functional connections .......

### Embodiments of the Invention

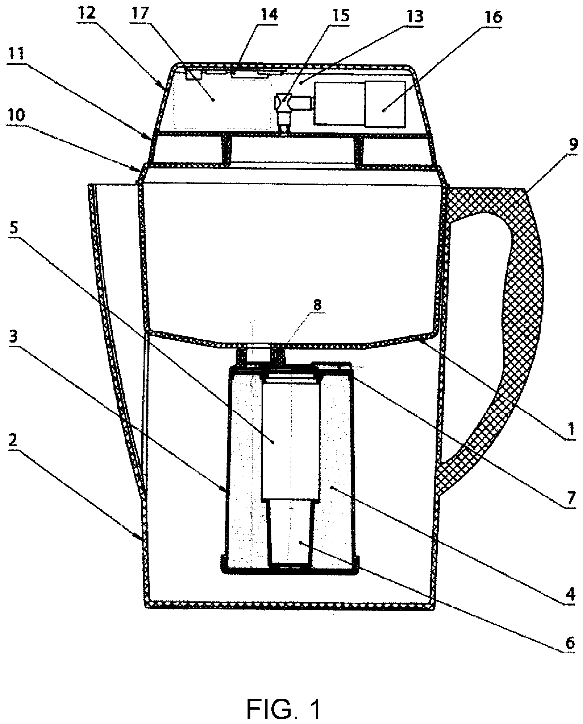

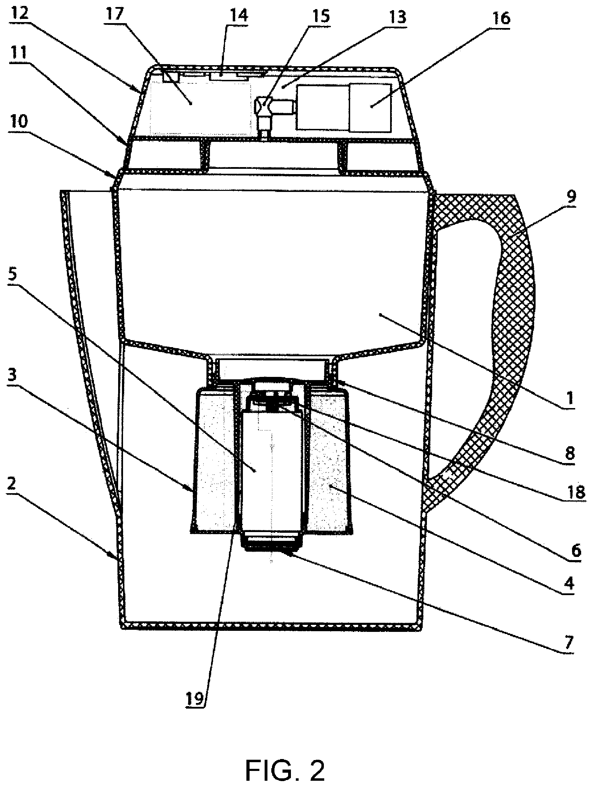

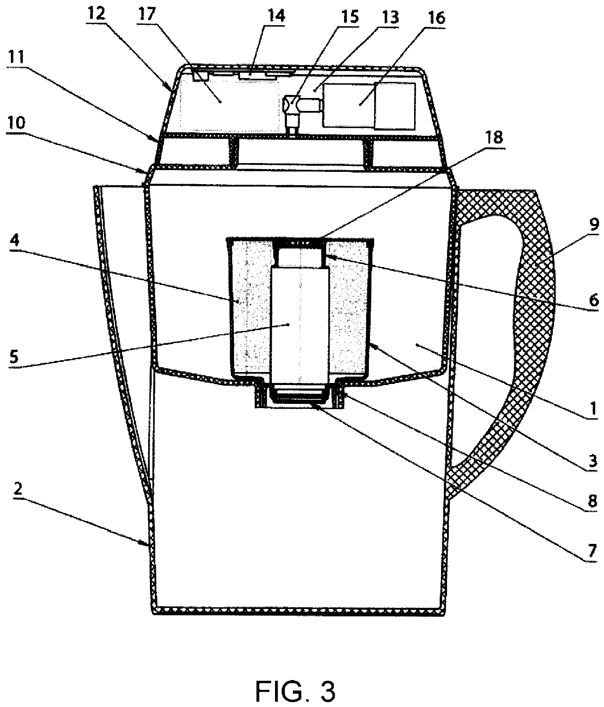

A liquid purification device comprises: an unpurified liquid-receiving container 1 with an upper neck 10, a structural piece 11 closing said neck, and a detachable cover 12; a filtering module 3 consisting, for example, of three filtering elements 4, 5, and 6; a purified liquid-receiving container 2; an automatic means 13 for time-tunable gas delivery in a filtration mode (an automatic delivery means 13); a means 18 preventing a purified liquid from penetration back into the filtering module (Figs. 2 and 3); and a means 7 for outflow of the purified liquid (Fig. 1).

The automatic delivery means 13 includes a pneumatic delivery unit 16, a control unit 14, a connecting member 15 embodied, for example, as a branch pipe, and a power supply 17.

The control unit 14 can be, for example, a microprocessor unit (a microcontroller) arranged on a board and comprising a volatile data memory, a real time counter, and a calculator.

The control unit 14 can be arranged in the cover 12 (Figs. 1, 2, 3) or in a handle 9 (not shown in the drawings) of the liquid purification device.

The control unit 14 is capable of programming operation of the automatic gas delivery means 13 in a mode where a gas is delivered into the unpurified liquid-receiving container 1 in a volume larger than a volume of an unpurified liquid present in the unpurified liquid-receiving container 1, and the automatic gas delivery means 13 is turned off until all liquid to be purified passes through the filtering module 3.

The power supply 17 can be arranged, for example in the cover 12 (Figs. 1, 2, 3) or in a handle 9 (not shown in the drawings) of the liquid purification device. For example, a power battery or an accumulator power battery can serve as the power supply 17.

For example, an air microcompressor or a membrane micropump is used as the pneumatic delivery unit 16.

Interconnections between components of the automatic delivery means 13 are as follows. An output of the power supply 17 is connected to an input to the control unit 14, an output of the control unit 14 is connected to an input to the pneumatic delivery unit 16 whose output is connected to the unpurified liquid-receiving container 1. The pneumatic delivery unit 16 communicates with a gas source, for example, ambient air.

The automatic delivery means 13 is connected to the unpurified liquid-receiving container 1 by means of the connecting member 15 (Figs. 1, 2, 3). The connecting member 15 can be embodied, for example, as a branch pipe, a pipe or a hose (not shown in the drawings) made of a polymeric material.

As stated before, the control unit 14 sets an operation mode for the automatic gas delivery means 13 in run of which the gas is delivered into the unpurified liquid-receiving container 1 in the volume larger than the volume of the unpurified liquid. Thus, contrary to the prototype, it is possible to turn the automatic delivery means 13 off until all liquid passes from the unpurified liquid-receiving container 1 through the filtering module 3, because a gas volume taken from an external source during an operation time of the automatic delivery means 13 is sufficient to provide the complete filtration cycle. After turning the automatic gas delivery means 13 off, the process of passing the liquid from the unpurified liquid-receiving container 1 and the filtering module 3 continues due to an excess volume of the gas remained within the unpurified liquid-receiving container 1.

The filtering module 3 consists of two filtering elements 4 and 5 and can have a third element 6 filled, for example, with activated carbon (Figs. 1, 2, 3). The filtering module 3 can be mounted within the unpurified liquid-receiving container 1 by a screw connection, a bayonet connection or by latching. A location for connection to the filtering module 3 is provided with at least one seal means 8 which holds the air within the receiving container 1 thereby to allow generation of an excess pressure above an unpurified liquid level. The seal means 8 preferably is a round O-ring.

In the structure of the filtering module 3 disclosed above, the liquid passes therethrough with a change of a liquid flow direction at least once and a significant portion of the liquid preferably enters purified liquid-receiving container 2 while a smaller portion of said liquid remains in the filtering module 3 and is necessary to wet the filtering elements 4, 5, and 6.

Contrary to the prototype, use of the filtering module having said structure became possible because the operating mode of the automatic delivery means 13 is designed to deliver the gas into the unpurified liquid-receiving container 1 in the volume larger than the volume of the unpurified liquid present in the unpurified liquid-receiving container 1. Being subjected to the excess gas pressure, the liquid not only overcomes a total hydraulic resistance, but also passes through the filtering media 4, 5, and 6 for a shorter time period.

The filtering element s can be made of and/or filled with different filtering media.

For example, the filtering element 4 in a housing of the filtering module 3 can be made of a dense sorption mixture based on high-effective fine sorbents, for example, an activated powder carbon, ion-exchange resins of different finenesses, ion-exchange fibers, activated carbon fibers, while the filtering element 5 is made of a hollow-fiber module or, for example, the element 4 is made of a carbon unit into which the filtering element 5 is inserted which is embodied as a hollow-fiber module. To eliminate infection of the hollow-fiber module, the member 6 filled, for example, with activated carbon can be arranged at the bottom of the filtering element 5.

It will be appreciated, however, that combinations of the filtering elements are not limited only to examples above.

In case when the filtering module 3 is arranged in the purified liquid-receiving container 2 while the means 7 for outflow of the purified liquid is in the upper portion of the filtering module 3, the unpurified liquid subjected to the gas forcedly passes from top to bottom through the filtering element 4 and next changes a direction and passes from bottom to top through the filtering element 6, the element 5 and leaves the space of the filtering module 3 via the means 7 for outflow of the purified liquid (Fig. 1).

In case when the filtering module 3 is arranged in the purified liquid-receiving container 2 while the means 7 for outflow of the purified liquid is at the bottom of the filtering module 3, the unpurified liquid subjected to the gas passes from top to bottom through the filtering element 4 and next changes a direction and passes from bottom to top through an internal passageway 19 between the filtering element 4 and the element 5 and then passes from top to bottom through the filtering element 6 and the filtering element 5 to the purified liquid-receiving container 2 (Fig. 2).

In case when the filtering module 3 is arranged in the unpurified liquid-receiving container 1 while the means 7 for outflow of the purified liquid is arranged at the bottom of the filtering module 3, the unpurified liquid subjected to the gas arrives from a lower portion of the unpurified liquid-receiving container 1 at the filtering element 4 and passes therethrough from bottom to top, next passes from top to bottom through the filtering element 6 and the filtering element 5, and arrives through the means 7 for outflow of the purified liquid at the purified liquid-receiving container 2 (Fig. 3).

There is delivery of the gas in the unpurified liquid-receiving container 1 above a surface of the unpurified liquid. In progress of filtration, an amount of the gas above a level of the unpurified liquid is decreasing, but after passage of the liquid in a significant volume into the purified liquid-receiving container 2, the gas amount remains sufficient for the gas to pass from the unpurified liquid-receiving container 1 through the filtering elements 4, 5, and 6 in the same sequence as the liquid to be purified passed through said elements. In progress of passing through the liquid purification device, the residual gas is transformed to aerosol state, because it is subjected to centrifugal forces so that it catches and carries in the gas flow the liquid droplets that remain in the unpurified liquid-receiving container 1 and in the filtering module 3, and is removed out of the filtering module 3 via the means 7 for outflow of the purified liquid (Fig. 1, 2, 3).

In order to prevent dehydration of the filtering module 3 after passage of the gas therethrough, so called "dead zones," for example, recesses or cavities, are provided in the structure of the filtering module 3 in the liquid purification device. There is accumulation of moisture in "the dead zones" and owing to capillary forces said moisture enters the filtering elements 4, 5, and 6. Maintenance of the filtering module 3 wetted allows its effective operation.

After the completion of the filtration cycle, the purified liquid is accumulated in the purified liquid-receiving container 2. To prevent the purified liquid from lifting back to the filtering module 3, the means 7 (Fig. 1) and 18 (Figs. 2, 3) preventing penetration of the purified liquid back into the filtering module 3 are provided in the structure of the liquid purification device.

In case when the means 7 for outflow of the purified liquid is arranged in the upper portion of the filtering module 3, since said means is arranged above the purified liquid level, it is simultaneously the means preventing penetration of the purified liquid back into the filtering module 3 (Fig. 1) and can be embodied as a branch pipe, particularly as a union body or a flexible hose (not shown in the drawings).

In case when the means 7 for outflow of the purified liquid in the purified liquid-receiving container 2 is in the lower portion of the filtering module 3, the means 18 preventing penetration of the purified liquid back into the filtering module 3 is, for example, a check-flow valve embodied preferably as a disc of a plastic material, for example, of rubber or santoprene. The means 18 can be arranged both in the upper portion (Figs. 2 and 3) and the lower portion (not shown in the drawings) of the filtering element 5.

Operation of the liquid purification device and implementation of the liquid purification method are as follows.

The unpurified liquid is poured into the unpurified liquid-receiving container 1 to be closed by the cover 12.

The automatic gas delivery means 13 is turned on automatically or manually. The control unit 14 operates the pneumatic gas delivery unit 16, and the gas arrives at the unpurified liquid-receiving container 1 while the volume of said gas is larger than the volume of the unpurified liquid in the unpurified liquid-receiving container 1.

A portion of the liquid subjected to the gas is passed from the unpurified liquid-receiving container 1 through the filtering module 3 when the automatic delivery means 13 is turned on, while another portion of the liquid passes through the filtering module 3 after turning the automatic delivery means 13 off.

The liquid to be purified passes the filtering elements 4, 5 and 6 sequentially while changing the flow direction and arrives through the means 7 for outflow of the purified liquid at the purified liquid-receiving container 2.

After passage of the main volume of the liquid through the filtering module 3 into the purified liquid-receiving container 2, the gas residual in the unpurified liquid-receiving container 1 passes through the filtering elements 4, 5, and 6 in the same sequence as the liquid to be purified passed through said elements, and carries in the gas flow the liquid droplets that remain in the unpurified liquid-receiving container 1 and in the filtering module 3, and is removed out of the filtering module 3 via the means 7 for outflow of the purified liquid.

After the completion of the filtration cycle, the purified liquid is accumulated in the purified liquid-receiving container 2 and remains therein until a user uses it, said liquid no contacting the filtering module owing to the means 7 (Fig. 1) and 18 (Figs. 2, 3) preventing penetration of the purified liquid back into the filtering module 3.

Use of the liquid purification device and method makes it possible to increase the degree of liquid purification simultaneously with reduction in a liquid purification time, and also eliminates the need to maintain the constant pressure above the unpurified liquid level and allows complete removal of the unpurified liquid out of the unpurified liquid-receiving container.

To confirm that the liquid purification device operates effectively, the liquid purification device of the present invention (hereinafter - the invention) and the prototype were comparatively tested as follows:
1. longevity hydraulic tests;
2. longevity tests on the simulated chloroform solution;
3. longevity tests on the simulated lead-ion solution.

The testing mode for all tests was selected as follows: operation for 8 hours per day, rest for 16 hours per day. The volume to be spilled was 1 liter. The inter-spillage interval was from 15 to 20 minutes.

### 1. Longevity Hydraulic Tests

City water was used as a simulated solution.

Test results are presented in Table 1.

**Table 1. Results of comparative longevity hydraulic tests**

| Filtered water volume, 1 | Water filtration time, minutes : seconds | |
|---|---|---|
| | Invention | Prototype |
| 1 | 00:51 | 01:15 |
| 5 | 00:49 | 01:25 |
| 10 | 00:54 | 01:45 |
| 30 | 00:55 | 02:11 |
| 50 | 00:51 | 02:28 |
| 100 | 00:56 | 03:11 |
| 150 | 00:59 | 04:22 |
| 200 | 01:01 | 04:21 |
| 250 | 00:58 | 05:43 |
| 300 | 01:04 | 06:03 |

The data of Table 1 shows that a far less time is required in operation of the invention as compared to use of the prototype.

### 2. Longevity Tests On The Simulated Chloroform Solution (the concentration was maintained within the range of from 285 to 325 µg/l)

Test results are presented in Table 2.

**Table 2. Results of comparative longevity test on removal of chloroform from water**

| Filtered water volume, 1 | Chloroform concentration in the simulated solution, µg/l | Chloroform concentration In the filtrate, µg/l | |
|---|---|---|---|
| | | Invention | Prototype |
| 1 | 301 | 0.5 | 0.6 |
| 5 | 323 | 0.8 | 1.1 |
| 10 | 299 | 0.9 | 1.1 |
| 30 | 304 | 1.4 | 1.8 |
| 50 | 304 | 1.1 | 2.9 |
| 100 | 289 | 1.2 | 4.6 |
| 150 | 305 | 2.2 | 6.9 |
| 200 | 315 | 3.2 | 8.9 |
| 250 | 312 | 2.8 | 9.8 |
| 300 | 299 | 3.3 | 9.9 |

It is evident from the data presented in Table 2 that if the total volume of the liquid passing through the invention and the prototype is 300 1, the residual chloroform concentration for the invention is 3.3 µg/l, in other words, is three times lower than that for the prototype.

### 3. Longevity Tests On The Simulated Lead-Ion Solution (the lead ion concentration was maintained within the range of from 144 to 156 µg/l)

Test results are presented in Table 3.

**Table 3. Results of comparative longevity test on removal of lead ions from water.**

| Filtered water volume, 1 | Lead ion concentration in the simulated solution, µg/l | Lead ion concentration In the filtrate, µg/l | |
|---|---|---|---|
| | | Invention | Prototype |
| 1 | 151 | 0.8 | 1.2 |
| 5 | 145 | 1.1 | 2.2 |
| 10 | 144 | 1.1 | 2.3 |
| 30 | 153 | 1.4 | 4.6 |
| 50 | 156 | 2.2 | 6.7 |
| 100 | 148 | 2.5 | 7.1 |
| 150 | 153 | 2.8 | 8.8 |
| 200 | 144 | 3.1 | 8.9 |
| 250 | 153 | 3.7 | 9.4 |
| 300 | 151 | 3.4 | 9.8 |

It is evident from the data presented in Table 3 that if the total volume of the liquid passing through the invention and the prototype is 300 1, the residual lead ion concentration for the invention is 3.4 µg/l, in other words, is almost three times lower than that for the prototype.

The results of all comparative tests confirm the effectiveness of operation of the invention in terms of improvement in the degree of liquid purification at simultaneous reduction in the liquid purification process time.

## Claims

1. A liquid purification device comprising: an unpurified liquid-receiving container connected to an automatic means for time-tunable gas delivery in a filtration mode by means of a connecting member, said automatic means for time-tunable gas delivery including a pneumatic gas delivery unit, a control unit and a power supply; a purified liquid-receiving container and a filtering module with means for inflow and outflow of the liquid, said device being **characterized in that** it is capable of displacement of all unpurified liquid out of the unpurified liquid-receiving container provided that a volume of a gas to be supplied is larger than a volume of an unpurified liquid present in the unpurified liquid-receiving container.

2. The liquid purification device according to claim 1, **characterized in that** the automatic means for time-tunable gas delivery is capable of continuing a liquid filtration process by means of displacement of a portion of a liquid out of the filtering module after filtration of all liquid from the unpurified liquid-receiving container into the purified liquid-receiving container.

3. The liquid purification device according to claim 1, **characterized in that** the control unit is capable of direct controlling the pneumatic gas delivery unit.

4. The liquid purification device according to claim 1 **characterized in that** the filtering module is provided with a means preventing a purified liquid from penetration back into said module.

5. The liquid purification device according to claim 4 **characterized in that** the means preventing the purified liquid from penetration back into said module preferably is a check-flow valve.

6. The liquid purification device according to claim 4 **characterized in that** the means preventing the purified liquid from penetration back into said module is arranged in an upper portion of the filtering module.

7. The liquid purification device according to claim 4 **characterized in that** the means preventing the purified liquid from penetration back into said module is arranged in a lower portion of the filtering module.

8. The liquid purification device according to claim 1 **characterized in that** the means for outflow of the purified liquid into the purified liquid-receiving container is arranged in the upper portion of the filtering module.

9. The liquid purification device according to claim 8 **characterized in that** the means for outflow of the purified liquid is arranged above a level of the purified liquid present in the purified liquid-receiving container.

10. The liquid purification device according to claim 1 **characterized in that** the filtering module consists of at least two filtering elements.

11. The liquid purification device according to claim 10, **characterized in that** the filtering module is capable of passing a liquid therethrough with a change of a liquid flow direction at least once.

12. The liquid purification device according to claim 10, **characterized in that** the filtering module is capable of providing a portion of a filtered liquid preferably to enter the purified liquid-receiving container while a smaller portion of said liquid remains in the filtering module to wet the filtering elements.

13. The liquid purification device according to claim 10, **characterized in that** the filtering module is embodied such that when a gas flow enters the filtering module and changes a direction of passing through said module at least once, it catches liquid particles and is removed from the filtering module together with them through the means for outflow of the purified liquid.

14. The liquid purification device according to claim 13, **characterized in that** the filtering module is embodied such that when the gas passes under action of centrifugal forces, the smaller portion of the liquid is delayed in "dead zones" of the filtering module.

15. A method for purifying a liquid, comprising: filling a receiving container with an unpurified liquid; performing an operation cycle of an automatic means for time-tunable gas delivery during closure of a water purifier cover by means of delivering a gas into the unpurified liquid-receiving container so that the unpurified liquid is subjected to a pressure of the gas and flows from the unpurified liquid-receiving container through the filtering module into a purified liquid-receiving container while an excess gas pressure gradually decreases until completion of the filtration process with the possibility of further repeating the operation cycle of the automatic means for time-tunable gas delivery, said method being **characterized by** displacing the unpurified liquid out of the unpurified liquid-receiving container by a pressure of a volume of the gas larger than a volume of the unpurified liquid present in the unpurified liquid-receiving container; and, after turning the automatic means for time-tunable gas delivery off, passing the liquid residual in the unpurified liquid-receiving container under a pressure of an excessive gas volume through the filtering module into the purified liquid-receiving container.
